# EUROPEAN PATENT SPECIFICATION

(11) **EP 0 308 868 B1**
(45) Date of publication and mention of the grant of the patent: **01.12.1993**
(21) Application number: 88115398.5
(22) Date of filing: 20.09.1988
(51) Int. Cl.: H02B 1/14

(54) **Enclosed switchboard**
Gekapseltes Schaltbrett
Tableau de commutation blindée

(30) Priority: 24.09.1987 JP 240483/87
(43) Date of publication of application: 29.03.1989
(73) Proprietor: TOGAMI ELECTRIC MFG. CO., LTD., Saga-shi Saga-ken (JP)
(72) Inventor: Maki, Kazuyoshi c/o Togami Elec.Mfg.Co.Ltd., Saga-shi Saga-ken (JP); Harada, Sadami c/o Togami Elec.Mgf.Co.Ltd., Saga-shi Saga-ken (JP); Nakashima,Takanori, 1-1, Ohtakarakita-machi (SA)
(74) Representative: Müller-Boré & Partner Patentanwälte

(56) References cited:
- GB-A- 742 880
- US-A- 2 921 998

## Description

### BACKGROUND OF THE INVENTION

### Field of the Invention

This invention relates to an enclosed switchboard such as a control center or other types.

### Background of the Invention

Generally in an enclosed switchboard such as a control center or other types, plural unit chambers are constructed by vertically partitioned box-like frame with shelf plates for several stages, and control units are housed in these unit chambers so that they are drawably placed. On the common frame of said control units are arranged various kinds of such control devices as circuit breakers, electromagnetic contactors, control relays, etc., and their connecting circuits are so composed that intended control functions can be secured. The main circuit, or occasionally the control circuit thereof is so constructed as to automatically connect to and disconnect from the corresponding circuit on the panel frame side by the put-in to and pullout from operations the switchboard frame.

Contacts are so arranged on the rear of the control unit that putting in the control unit brings a power contact into connect with a bus bar (generally vertical bus bars) arranged on the panel frame of the switchboard, through which power is supplied to equipments mounted on the switchboard. This also brings load contacts into connect with the load side terminals, thereby power is supplied to the load side with switching on and off the control unit.

The enclosed switchboard provided with such a drawer type control units is so designed that the front door of the panel frame can be closed only with the units in their retracted positions. Meanwhile, in the test and disconnected positions with the contacts drawn out of the bus bars the control units are projected from the front of the panel frame, preventing to close the door.

In the conventional switchboard described above, the door can not be closed in the disconnect and test positions except in the connect position, necessitating the door to be left open while checking the interior and testing or in the disconnected state. However, leaving the door open impairs the enclosed function of the switchboard, allowing for electric shock and other dangers due to the blowing emission of arcs and substances included out of the switchboard in case of accidents. It may also block the passage and hamper operators from going through, sometimes causing injuries or damages due to accidental bumping.

Thus, for the above reasons, it is very inconvenient as in the conventional enclosed switchboards when any control unit need not be placed in the connected position for a long time, that the control units must be removed and stored some other location so as not to spoil the enclosure function of a switchboard by closing the door and not to block the passage in front of the switchboards.

Many objects and merits can become apparent through the description in the brief description of drawings attached hereto, the description of the preferred embodiment of the preventative invention and the detailed description thereof hereinafter.

In order to solve the problems described above, the applicant has already proposed an enclosed switchboard which is known as described therein from the European Patent Application EP-A-0278984, (which is state of the art according to Art 54(3) EPC as it is a postpublished document. The following description of Fig. 15-22 relates to this document.).

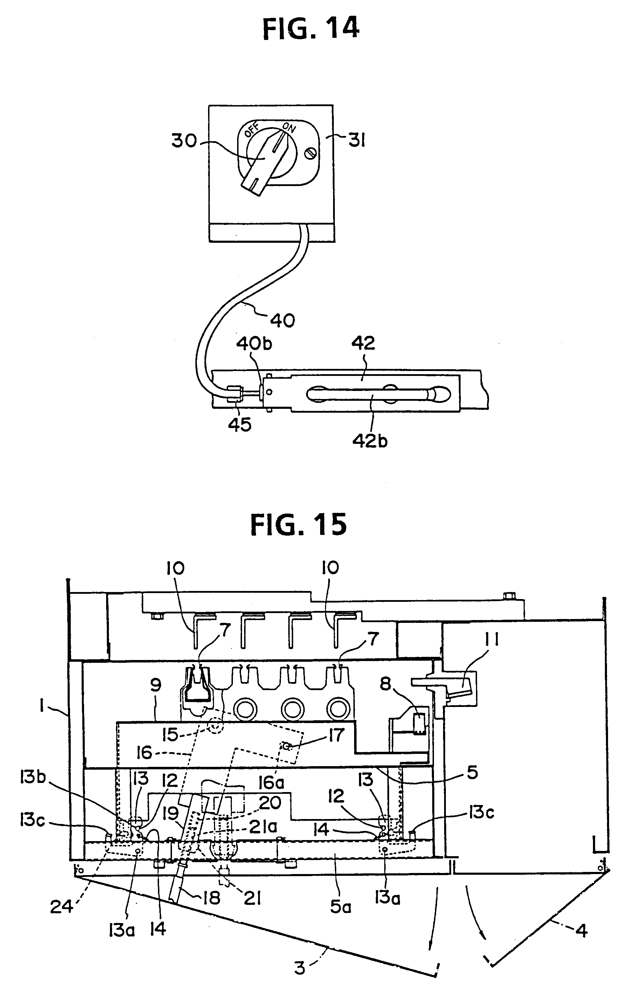

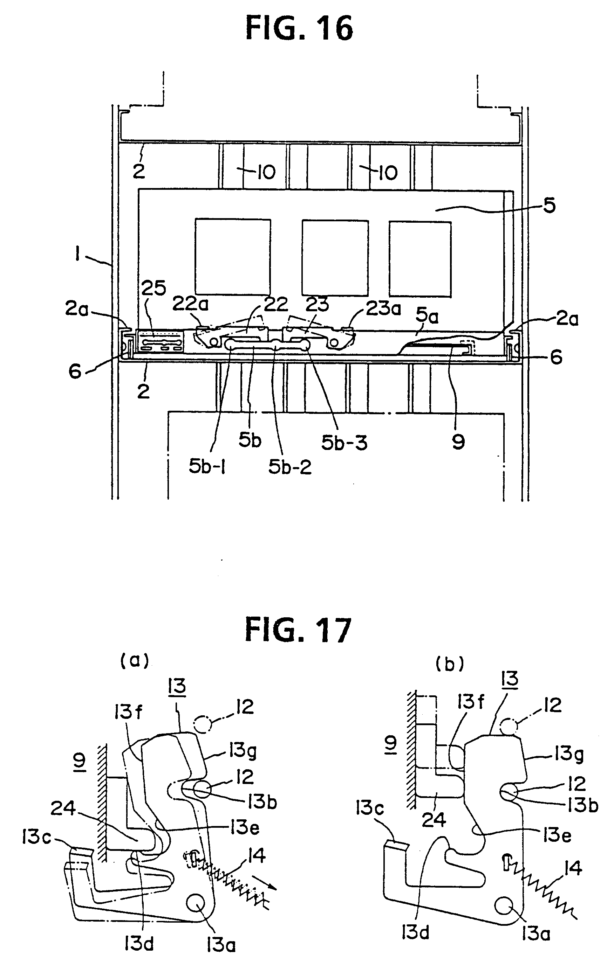

Namely, Figs. 15 and 16 are a horizontal plane view of an enclosed switchboard used in the present invention and a front view of the primary part thereof, respectively. In these figures, the numeral 1 indicates a panel frame constituting the boxlike body of the switchboard, the numeral 2 indicates shelves fixed to said panel frame, and the numerals 3 and 4 are doors. Said shelf 2 is fitted with guide frames 2a. The unit frame 5 provided with various pieces of equipment is inserted and placed along said guide frames 2a from the front of the panel frame 1. The numeral 6 is a roller fitted to permit easily mounting of the unit frame 5 with a slight force. The unit frame 5 has a contact mounting frame 9 equipped with a power contact 7 and a load contact 8 so mounted on the rear as to travel in the connecting and disconnecting directions of said contacts 7 and 8 , i.e., in the forward and backward direction thereof. The contacts 7 and 8 are wired using wires (not shown) with the equipments mounted on the frame 5.

The panel frame 1 has a bus bar 10 of such as a 3-phase 4-wire system and a load-side terminal 11 to which said power contact 7 and said load contact 8 are to be connected respectively.

Lock pins 12 are set up at two points on said shelf plate 2. When said unit frame 5 is inserted in said shelf plate 2, these lock pins 12 are so composed that a hook 13 of which intermediate portion is rotatably mounted by means of an axis 13a and the groove 13b of the front side (at the side of clockwise) of said hook 13 is engaged to said lock pins 12 so as to prevent removing of the unit frame 5 from the panel frame 1. The numeral 14 indicates a spring for energizing the hook 13 clockwise to retain the engagement thereof and 13c is a release lever cancel the engagement thereof.

As shown in Fig. 17, the hook 13 has a projection 13d, a concave 13e, and a straight portion 13f formed on the back, which operates together with an actuator 24 fixed at the side of said contact mounting frame 9. When the contact mounting frame 9 is disconnected from the unit frame, as shown in Fig. 17(a), the actuator 24 forces the projection 13c against the energizing force of the spring 14, causing the hook 13 to slightly pivot around the axis 13a and thereby withdraw a little from the lock pin 12. Under this condition, putting in the unit frame 5 together with the contact mounting frame 9 along the shelf 2 causes the lock pin 12 shown in a dot-dash line in Fig. 17(a) to come into contact with the cam slant 13g of the hook 13, travel the hook 13 slightly inclined left, and finally engage with the groove 13b thereof as shown in a solid line. The unit frame 5 may be smoothly removed from the shelf 5 by pulling the frame 5 with the release lever 13c pushed by hand to the state shown in the dot-dash line, which releases the engagement between the lock pin 12 and the hook 13.

When the contact mounting frame 9 is in the test or connected position in relation to the unit frame 5, the possible insertion of the unit frame 5 along the shelf 2 will lead to the direct connection of the contacts to the power source, which could prove to be a danger. And it is possible pulling out of the shelf 2 the unit frame 5 in the test or connected position is also dangerous. Therefore, the construction should be such that, when the contact frame 9 is in the test and connected positions in relation to the unit frame 5, as shown in Fig. 17(b), the actuator 24 is in contact with the straight portion 13f of the hook 13 on the back. In the figure the actuator 24 is shown in the test position by the solid line, and in the connected position by the dot-dash line. While the contact mounting frame 9 is positioned in such a relation with the unit frame 5, the hook 13 cannot be pivoted by the actuator 24, thus enabling said hook 13 to prevent the lock pin 12 fixed on the shelf 2 from being engaged or disengaged. Accordingly, in the state shown in Fig. 17(b) this prevents the unit frame 5 from being putted in the shelf 2 as well as preventing the unit frame 5 mounted from being removed in spite of pushing of the release lever 13c. In this way the loading and unloading of the unit frame is allowed only in the disconnected position of the contacts, making contributions to improvement in safety.

The unit frame 5 is fitted with an interlocking arm 16 rotatably mounted around an interlocking arm axis 15 studded and fixed at said unit frame 5 for driving the contacts, while the contact mounting frame 9 is furnished with a driving shaft 17, which is inserted in a slot 16a prepared at the edge of the interlocking arm 16 for floating engagement therein. An operating rod 19 is fixed at the base of the interlocking arm 16 for engaging with the operating lever 18 which travels the contact mounting frame 9 to its test and connected positions. The edge of the operating rod 19 faces to the slot 5b opened in a grip frame 5a at the front of the unit frame 5.

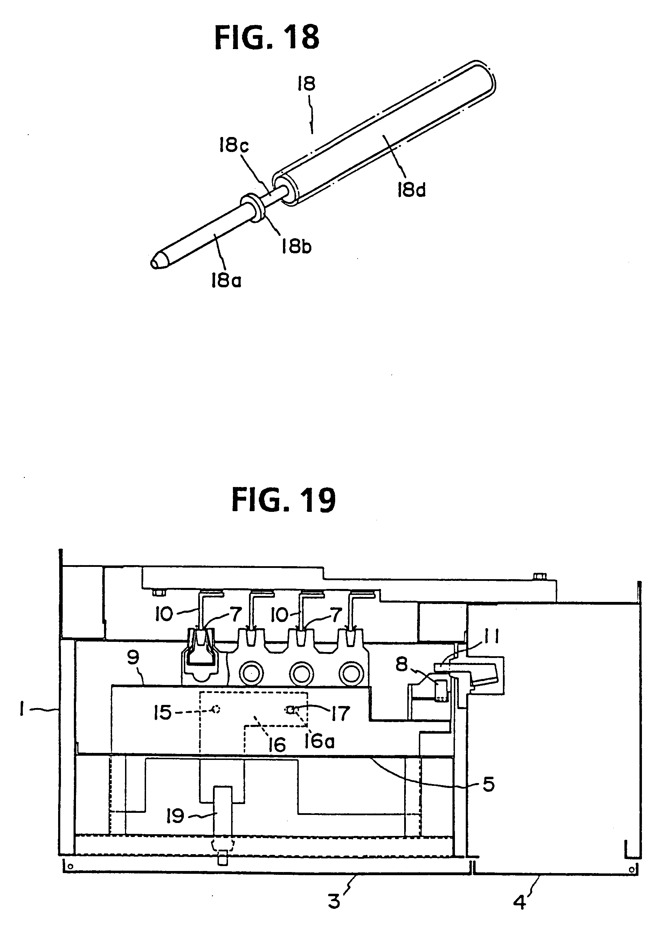

The operating rod 19 contains a lock collar 21, energized forward by a spring 20, having a guide hole 21a in the center thereof in which the edge of the operating lever 18 shown in Fig. 18 is inserted. The operating lever 18 consists of the inserting portion 18a, a collar 18b, an small diametered portion 18c and a grip 18d. The grip 18d is applied with a rubber coating. The inserted edge 18a has a diameter larger than the width of the slot 5b of the grip frame 5a shown in Fig. 16 and smaller than the diameters of notches 5b-1, 5b-2, and 5b-3. The diameter of the small diametered portion 18c is smaller than the width of the slot 5b. The diameter of the collar 18b is larger than that of the guide hole 21a of the lock collar 21, larger than the width of the slot 5b of the grip frame 5a, and smaller than the diameters of the notched portions 5b-1, 5b-2, and 5b-3. Thereby the operating lever 18 can not be inserted at any other position of the slot 5b than the notched portions 5b-1, 5b-2 and 5b-3. Once the operating lever 18 has been inserted in the lock collar 21, it can not be removed from the slot at any position on the way but can be removed only at the notched portions 5b-1, 5b-2 and 5b-3. In addition, at these notched portions 5b-1, 5b-2 and 5b-3, the tip end of the lock collar 21 is such that it may be a little projected forwards of these notched positions due to the energizing force of the spring 20.

The lock collar 21 has the edge of a diameter slightly smaller than those of the notches 5b-1, 5b-2, and 5b-3, thereby permitting the collar when projected as mentioned above to engage with the notches and lock.

Thus, turning the operating lever 18, the edge thereof being inserted in the lock collar 21, clockwise in the drawing travels the contact unit 9 to its test and connected positions. Referring to Fig.16 the three notches of a larger diameter 5b-1, 5b-2, and 5b-3 of the slot 5b indicate the disconnected, test, and connected positions respectively, only in which positions the edge of the operating lever 18 can be inserted therein and removed therefrom.

If the operating lever 18 is shifted to the notched portion 5b-2 of test position, which is the interim position, from the other notched portions 5b-1 or 5b-3, the operating lever shall be swung in order to make way for shifting. Test position stoppers 22 and 23 are furnished to prevent the operating lever from shift, thereby causing the operating lever 18 to be prevented from accidental movement from test position to disconnected position or connect position and causing the operating lever 18 to be prevented from direct shift to connect position by overtraveling force when the operating lever is to be shifted toward test position. When shift the operating lever 18, it can be freely moved with the other end lifted by pushing the projection pieces 22a and 23b of the stoppers 22 or 23.

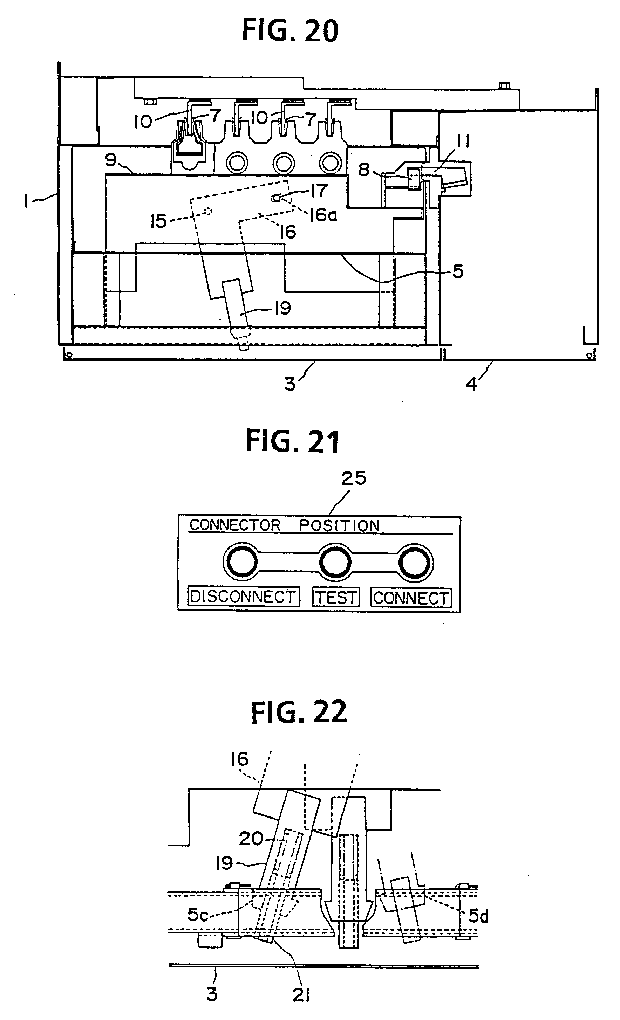

In the drawing the numeral 25 indicates a contact position indicating name-plate which shows the position of the contact operating mechanism or interlocking arm 16 and the contact position, whose details are shown in Fig. 21.

In addition, stoppers 5c and 5d (See Fig. 22.) are provided on the grip frame 5a to bring the operating rod 19 to a halt when the operating rod 19 gets actuated at both the ends of the slot 5b and the edge of the operating rod 19 has reached the notched portions 5b-1 or 5b-3. These stoppers 5c and 5d are so arranged as to contact with the trapezoidal head formed at the edge of the operating rod 19, the slant side of said trapezoidal head being so designed as to contact with the stoppers 5c and 5d nearly at a right angle thereto.

Figs. 19 and 20 respectively show the states where the contact mounting frame 9 traveled to its test and connected positions by way of the operating lever 18.

In the test position as shown in Fig. 19, the power contact 7 is in contact with the bus bar 10 to supply power to the on board equipment of the unit frame 5, while the load contact 8 is in such a position as to keep out of contact with the load side terminal 11 affording enough space for disconnection, thereby providing the power supply to the equipment to be subjected to the test without any supply to the loads.

In the connected position shown in Fig. 20, both the power contact 7 and the load contact 8 are connected to the bus bar 10 and the load side terminal 11 respectively. Then, it becomes normal operating states.

As shown in the above, in the system disclosed here, the unit frame 5 can be stored at a certain fixed position where the door 3 can be closed and blocked in relation to said panel frame 1. At this position it is possible to operate the contact mounting frame 9 to the disconnected, test, and connected positions.

An operating handle is provided on the panel surface, in order to ON-OFF operations of a circuit breaker built in an enclosed switchboard. And to avoid dangers a door of the enclosed switchboard can be so composed that it can be opened only when the operating handle is set to OFF. This is completely the same in an enclosed switchboard of the above mentioned structure.

Therefore, it is contemplated that a contact mounting frame can be shifted from disconnected position to tested position and furthermore to connect position with its door closed for the sake of preventing danger when operating with the door opened, preventing invasion of foreign matter and dust to the inside and furthermore eliminating troublesome opening operations of the door.

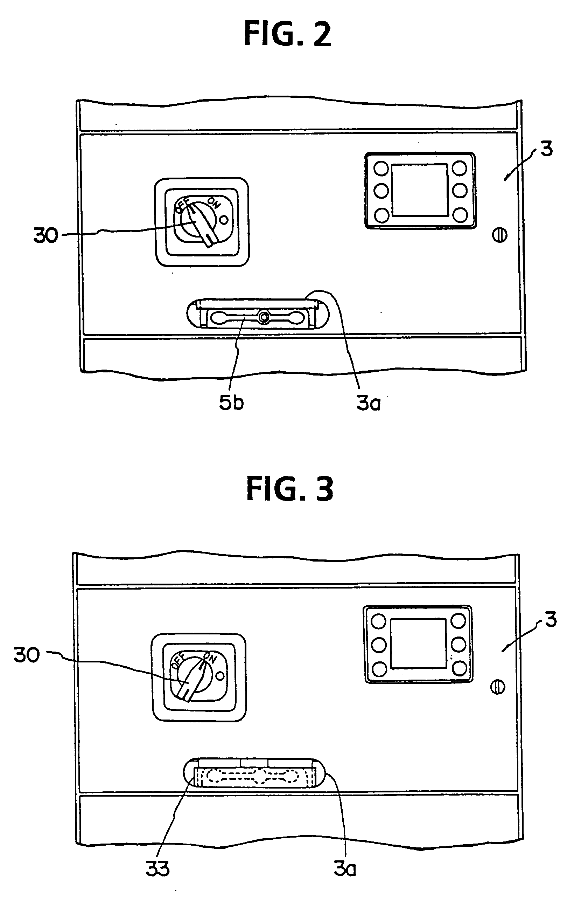

For this reason, we can think it simply that as shown in Fig.2 an opening 3a is to be formed at the door 3 so that a slot 5b which is formed at a grip frame 5a of the unit frame 5 may be exposed to the front side and so that an operating lever 18 shown in Fig. 18 can be inserted through the opening 3a. However, if only the opening 3a is provided at the door 3, any interlocking mechanism by which the contact portion can be closed and opened only when the circuit breaker is turned off can not be allowed.

### SUMMARY OF THE INVENTION

The present invention intends to solve these problems. Therefore, one important object of the present invention is to provide an interlocking mechanism for opening and closing operations of the contact portion even in case that an opening for insertion of an operating lever at the door is provided.

In accordance with the present invention this is achieved by an enclosed switchboard according to claim 1.

A new and novel aspect of an enclosed switchboard disclosed by the present invention is accomplished by the following features such that an opening portion is formed at a position corresponding to the spot of insertion of an operating lever on a door to cover the whole front side of panel frame, a shutter mechanism is provided to cover the portion of the spot of insertion of the operating lever between the opening portion and the point of insertion of the operating lever, and an interlocking mechanism is provided between the shutter mechanism and an operating handle of a circuit breaker loaded in the unit frame. For this reason, it is possible to operate contact mounting frame with the door of the switchboard closed, and the operation thereof is also made very easy. Thus as there is no need to open the door when making operations of contact mounting frames, there is no worry about electrical shock to electrically charged portions of the operation unit. Therefore, the structure disclosed by the present invention gives a sense of safety to operators and the safety in operation is much increased. Furthermore, as a shutter mechanism is provided, it is impossible to shift the contact mounting frame to connect position and to draw it out from connect position, thereby preventing accidents.

### BRIEF DESCRIPTION OF THE DRAWINGS

Fig. 1 is the front elevation showing the states where the door of an enclosed switchboard is open which shows the preferred embodiment of the present invention;
Fig. 2 is the front elevation when the operating handle is turned off with the door closed;
Fig. 3 is another front elevation when the operating handle is turned on with the door closed;
Fig. 4 is an explanatory view of a shutter mechanism when the operating handle is turned off;
Fig. 5 is another explanatory view of the shutter mechanism when the operating handle is turned trip;
Fig. 6 is still another explanatory view of the shutter mechanism when the operating handle is turned on;
Fig. 7 is a perspective view of components of the shutter mechanism;
Figs. 8 through 14 are explanatory views shows preferred embodiment of the present invention;

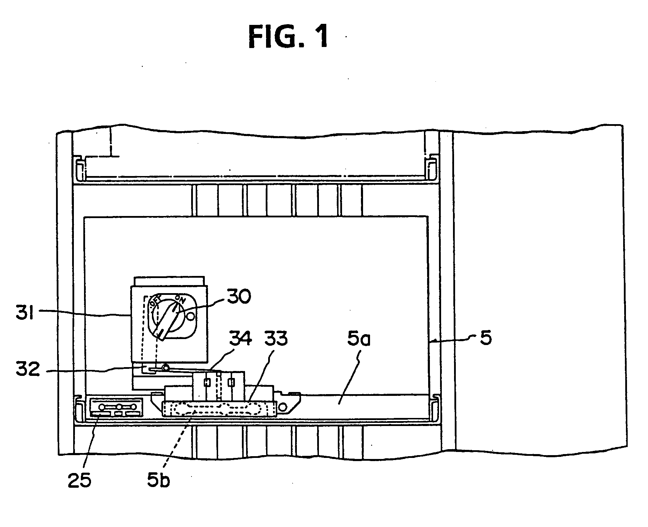

The following Fig. 15-22 correspond to Fig. 1-8 of the cited EP-A-0278984.
Fig. 15 is the cross sectional plan showing an example of the prior art to which the present invention can be applied, according to EP-A-0278984.
Fig. 16 is the front elevation view of the main part of the enclosed switchboard in Fig. 15;
Fig. 17 is an explanatory view showing the relationship of engagement between a hook and a lock pin;
Fig. 18 is a perspective view of the operating lever;
Figs. 19 and 20 are a plan showing the traveling states of contact mounting frame at test position and connect position, respectively;
Fig. 21 is the front elevation showing the details of a name plate; and
Fig. 22 is an explanatory drawing showing the relationship between an operating rod and a stopper.

### DESCRIPTION OF THE PREFERRED EMBODIMENTS

The following is the detailed description of the preferred embodiment shown in the drawings. All those which have the same functions as those of the components which are shown in Figures after Fig. 15 are given the same number, and the explanation for them is omitted herein.

Fig. 1 is the front elevation of a unit frame 5 with a door 3 open. In this figure, 30 shows an operating handle of a circuit breaker; 31 shows the operating handle mounting frame; 32 shows an interlocking lever which can be elevated and lowered in interlocking relation to operation of the operating handle 30. A shutter 33 is placed for free elevation and free lowering at the front side of a slot 5b formed at a grip frame 5a of the unit frame 5 and is linked to the interlocking lever 32 via a shutter drive arm 34. And the shutter 33 is so composed that it can cover the slot 5b when the operating handle 30 is set to ON and the slot 5b can appear as the shutter 33 goes upwards when the operating handle 30 is set to OFF.

As shown in Fig.2, an opening 3a is provided at the door 3 and the slot 5b can appear through the opening 3a when the operating handle 30 is set to OFF. When the operating handle 30 is set to ON the shutter 33 goes down to cover the slot 5b, thereby causing the operating lever 18 not to be inserted through the opening 3a.

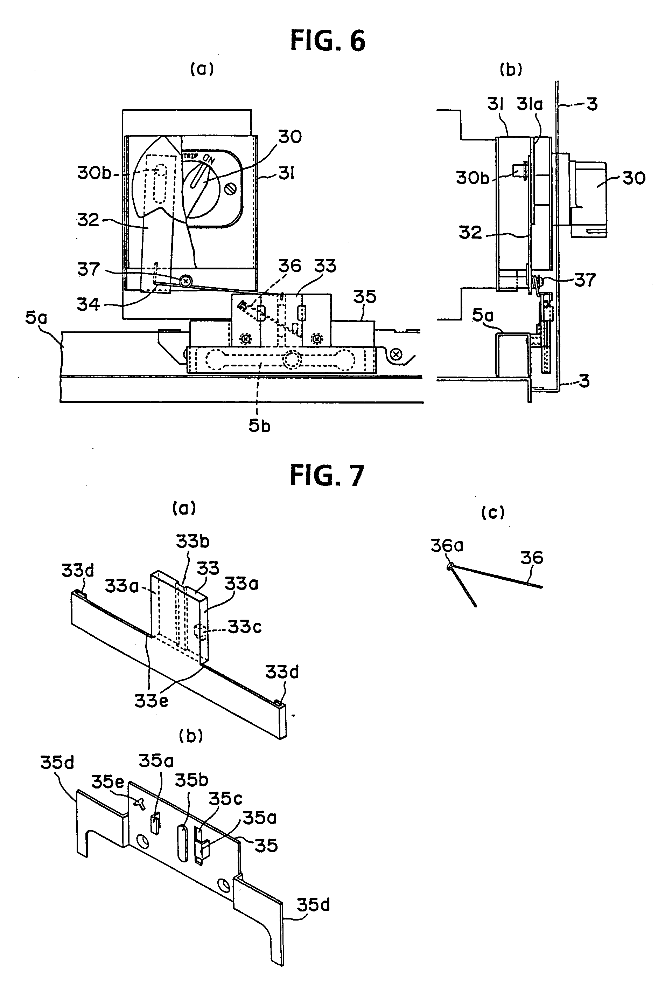

Fig. 7 shows the details of this shutter mechanism. Fig. 7(a) shows the shutter itself 33; Fig. 7(b) shows a guide plate 35 of the shutter; and Fig. 7(c) shows a spring 36 by which the shutter is usually lifted up. The shutter guide plate 35 is screwed to a grip frame 5a of the unit frame 5, and the shutter 33 is installed for free elevation and lowering in relation to this shutter guide plate 35. The shutter guide plate 35 is furnished with L-shaped 1st guides 35a which are internally folded respectively and 2nd guide 35b which is projected and long in the vertical direction. The L-shaped 1st guides 35a and the 2nd guide 35b so operate together with sides 33a and guide groove 33b of said shutter 33 that the shutter 33 can smoothly move in the vertical direction. And a shoulder 33e of the shutter 33 is brought into contact with the L-shaped guide 35a installed the shutter guide plate 35, thereby causing the shutter 33 not to be elevated beyond the predetermined position. Both the lower end parts of the shutter 33 are projected to be reversed T-shaped, and at the ends thereof a folded portion 33d is produced. This folded portion 33d holds an edge 35d of the shutter guide plate 35, thereby cause resistance in the vertical movements due to inclination of the shutter 33 not to be produced. When the shutter 33 is assembled in the shutter guide plate 35, a spring 36 shown in Fig. 7(c) is so composed that one end thereof may be engaged with an engagement projection 33c, a folded basic portion 36a thereof may be engaged with a mounting hole 35e of the shutter guide plate 35 and the other end thereof may be engaged with the shutter guide plate 35, respectively. Usually the shutter 33 is energized upwards by means of the spring 36.

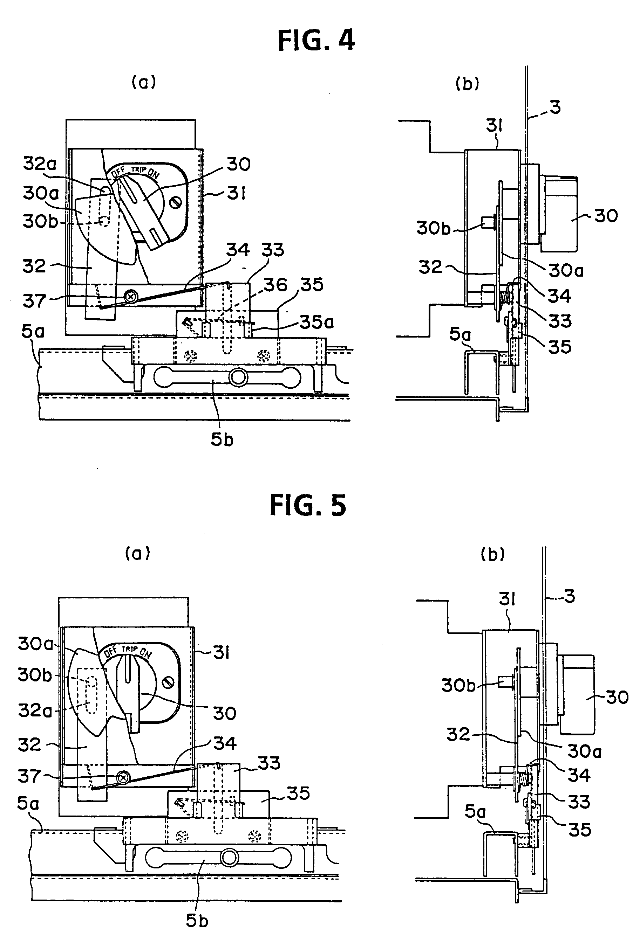

Fig. 4 shows the state where a shutter mechanism so composed as shown in the above description is built in so as to be interlinked with a shutter drive arm 34. Fig.4(a) shows a front elevation and (b) shows a side view. It shows that the operating handle 30 of a circuit breaker is set to OFF. In the same Fig., a pin 30b is attached to a cam plate 30a which is interlocked with rotation of the operating handle 30, thereby cause this pin 30b to be engaged with a slot 32a provided at the interlocked lever 32. In addition, the basic portion of the shutter drive arm 34 made of spring materials is linked to the lower end portion of the interlocking lever 32. The interim portion of the shutter drive arm 34 is supported at another pin 37 attached to the mounting frame 31 of the operating handle, and the tip end thereof is engaged and fixed at the upper end portion of the shutter 33. Under the condition shown in Fig.4, as the operating handle 30 is set to OFF, the interlocking lever 32 is pushed downwards, and as no pushing force is given to the shutter 33 by the shutter drive arm 34 the shutter 33 is elevated by means of pushing force of the spring 36. Therefore, it is possible to insert the operating lever 18 in the slot 5 b and to shift for operation the contact mounting frame 9 to each of the positions thereof.

Fig. 5 shows the state where the operating handle 30 is located at trip position. Fig. 5 (a) is the front elevation view and Fig. 5 (b) is a side view. Under this condition, a cam plate 30a is rotated by a prescribed angle from the state shown in Fig.4. But only the pin 30b moves in the slot 32a of the interlocking lever 32 and the position of the interlocking lever 32 in the vertical direction is not changed. Namely, the shutter 33 remains as it is elevated. Also in this condition, it is possible to operate the contact mounting frame 9.

The reason why a circuit breaker is at TRIP position is that a certain abnormality occurs. Therefore, for investigation of the cause it is necessary to draw out the corresponding unit as it is. In the conventional enclosed switchboard, it is necessary to open the door and to shift the contacts to disconnect position in order to take out the corresponding unit. If so, as at least the primary side of a circuit breaker is electrically charged even though the circuit breaker tripped, it is very dangerous since there is a worry about electric shock at the primary side of the control units. Furthermore, there is another possibility for contacts to have been connected in a certain abnormal condition due to overcurrent. If the contacts are operated under the above condition, arcing may occur thereby causing electrical short-circuit. Thus, dangerous secondary damages may be produced. However, even though such an abnormal phenomenon occurs, a door can act as damage prevention wall if the door is provided when contacts are operated. So, it is safer.

Fig. 6 shows such the state where the operating handle 30 is set to ON. Fig. 6(a) is the front elevation and Fig. 6(b) is a side view. Under this condition, the interlocking lever 32 is pushed upwards by a pin 30b and the shutter drive arm 34 which is interlocked thereto is lowered at the side of the shutter 33, centering on the pin 37 which operates as fulcrum herein. Thus, the shutter 33 overcomes the push-up force of the spring 36 and is pushed downwards. Therefore, the slot 5b can be covered, thereby causing the operating lever 18 not to be inserted. Accordingly, the contact mounting frame 9 can not be operated.

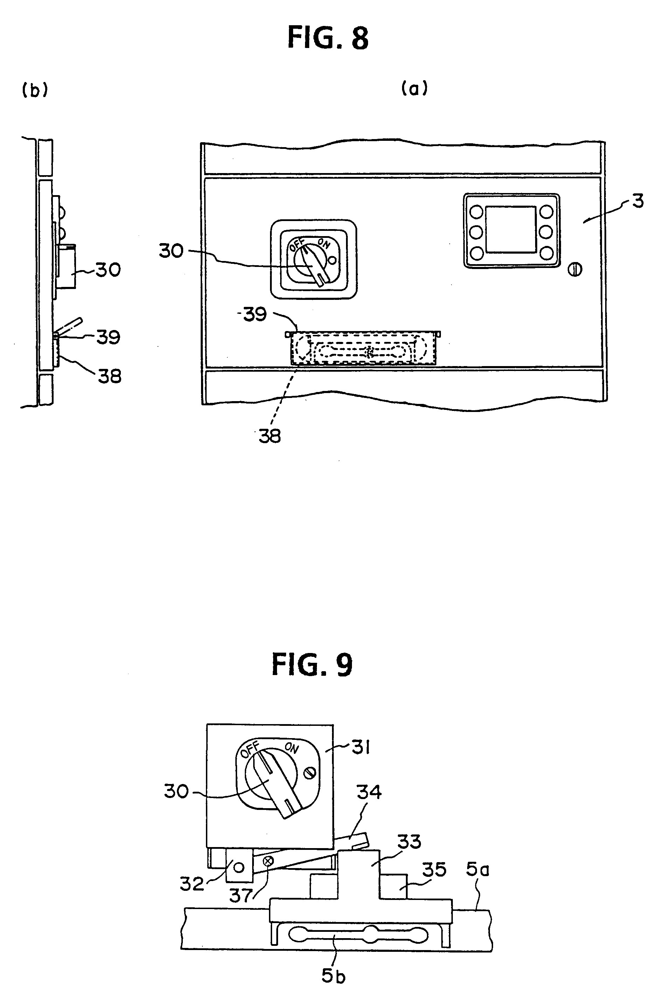

Fig. 8 shows one of the examples of the preferred embodiment in which dust-proof structure is adopted. Fig. 8(a) is the front elevation and Fig.8(b) is a side view. In this example, the opening 3a of the door 3 is so composed that the opening 3a may be covered with a transparent cover 38 which can be freely opened and closed by means of a hinge 39. When operating the contact mounting frame 9, this cover 38 is opened thereby causing the operating lever 18 to be inserted for operation. Thus the opening 3a is enclosed in other cases than on operating the contact mounting frame 9 in order to prevent invasion of foreign matter and dust.

Fig. 9 shows an example of the preferred embodiment in which the shutter drive arm 34 is made of plate material. Namely, one end of the shutter drive arm 34, which is made of rigid body, is linked to the tip end of the interlocking lever 32, and the other end thereof is so arranged as to be brought into contact with the upper edge of the shutter 33. The operation thereof are the same as those shown for the preferred embodiment in Fig.4, Fig.5, and Fig.6. Therefore the description is omitted here.

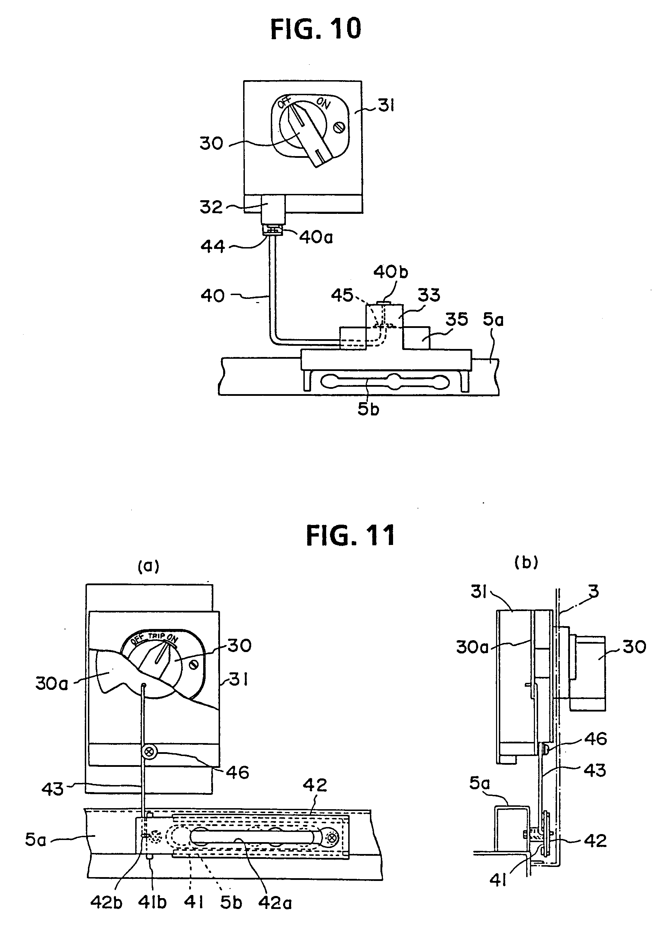

Fig. 10 shows another example in which a wire 40 having almost the same structure as a shutter release device of a camera instead of the shutter drive arm 34. Namely, the vicinity of an operating end 40a of the wire 40 is supported at a wire supporting bracket 44 and the operating end 40a is so arranged that it can be brought into contact with the lower edge of the interlocking lever 32. Then, the vicinity of another operating end 40b of the wire 40 is supported at another wire supporting bracket 45 and the operating end 40b is linked to the upper end of the shutter 33. In this structure, as the interlocking lever 32 is shifted down when the operating handle 30 is set to OFF side, the operating end 40a of the wire 40 is pushed down, thereby causing the shutter 33 to be elevated. If this structure is employed, it is possible to propose a flexible arrangement in cases that the operating handle 30 is far from the shutter 33.

The above embodiments of the present invention shows a structure that the slot 5b which is the inserted portion for the operating handle 18 can be opened and closed by vertical movement of said shutter 33. However, a horizontal slide type of shutter may be adopted, too.

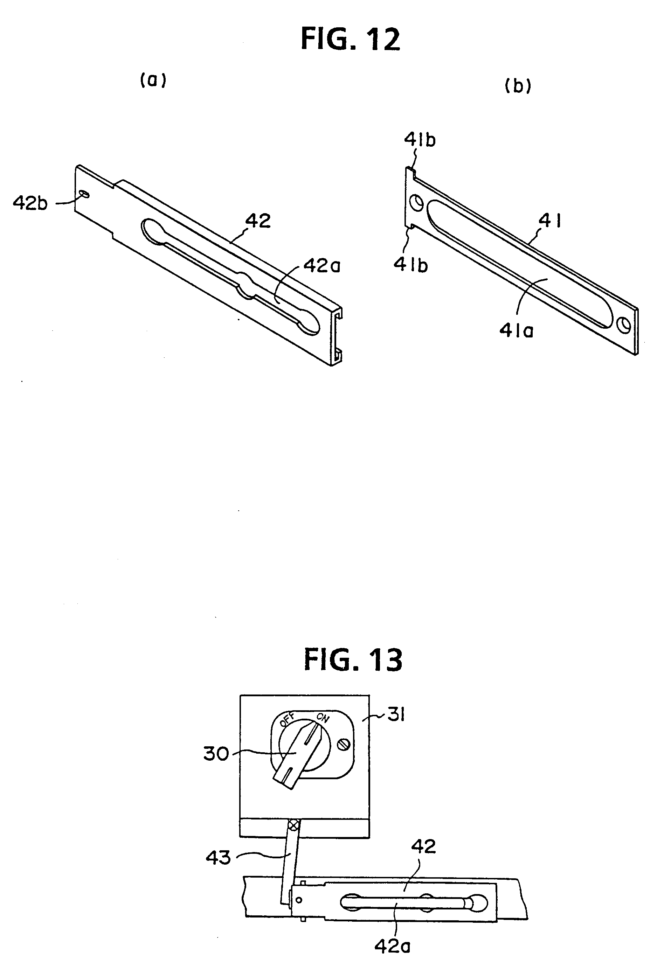

Fig. 11 shows the preferred embodiment of the present invention having a horizontal slide type of shutter. Fig. 11(a) is the front elevation and Fig.11(b) is a side view. Fig. 12 is a drawing showing the components thereof. Namely, as shown in Fig.12 (b), a shutter guide 41 in which a groove 41a whose width is the same in dimension as the hole diameter of the slot 5b is mounted on the grip frame 5a and is attached a shutter 42 shown in Fig. 12(a) which is slidable in horizontal direction. In the shutter 42, a groove 42a which is of the same type as the slot 5b is formed. As shown in Fig.11, an engagement hole 42b of the shutter 42 is connected to the cam plate 30a of the operating handle 30 by means of the shutter drive arm 43 which is supported by a pin 46 on the operating handle mounting frame 31 on the middle. With the operating handle set to ON, the groove 42a of the shutter 42 is slid from the slot 5b which has been formed on the grip frame 5a. Therefore, it is impossible for the operating lever 18 to be inserted. When the operating handle 30 is set to OFF or TRIP, the cam plate 30a rotates in the counterclockwise direction, thereby causing the lower end of the shutter drive arm 43 to move the shutter 42 in the left direction and to stop the shutter 42 when it comes in contact with the stopper 41b. Under this condition, as the groove 42a is aligned with the slot 5b, it becomes possible to make operations by the operating lever 18.

Fig. 13 shows still another example of the preferred embodiment in which the shutter drive arm 43 in Fig.12 is made of plate materials instead of spring materials. Fig. 14 shows another example of the preferred embodiment in which a wire 40 having the same structure as that of a shutter release device of a camera is adopted instead of the shutter drive arm 43. In this example, the vicinity of an operating end 40b of the wire 40 is supported by a supporting bracket 45 wherein the shutter 42 is pushed and pulled by the operating end 40b thereof, as well as the example shown in Fig.10, thereby causing the positions of the groove 42a and the slot 5b to be aligned and misaligned. Hence, it is possible to make operations by means of the operating lever 18.

And the present invention is not limited to the above examples of the embodiments. That is, a shutter mechanism and an opening and closing mechanism thereof can be accomplished by other methods and in different manners.

## Claims

1. An enclosed switchboard comprising one or more unit frames (5) being installed for mounting devices or components so that a said unit frame (5) can be drawn out and put in with relation to shelf plates (2) attached to a panel frame (1), one or more contact mounting frames (9) furnished with a power contact (7) which can be connected to and disconnected from a bus bar (10) arranged on said panel frame and a load side contact (8) which can be connected to and disconnected from a load side terminal (11) being shiftably installed in said direction of connection and disconnection in relation to said unit frame, and a lever interlocking mechanism (16) being built in said unit frame and being installed for converting rotational movements of an operating lever (18) at the front side of said unit frame into linear movements in the direction of connection and disconnection of said unit frame, wherein an opening (3a) is formed at a position on a door (3) which covers the front surface of said panel frame (1), the opening (3a) corresponding to the position of insertion of said operating lever (18) in said lever interlocking mechanism, a shutter mechanism (33; 42) is provided to cover the position of insertion of said operating lever (18) between said opening (3a) and said position of insertion of said operating lever (18), and an interlocking mechanism is provided between said shutter mechanism (33; 42) and an operating handle (30) of a circuit breaker which is located on said unit frame (5).

2. An enclosed switchboard according to claim 1, wherein said panel frame (1) comprises a door (3, 4) for closing off and for opening up said opening (3a).

3. An enclosed switchboard according to claim 2, wherein said opening (3a) is disposed in said door such that a contact frame (9) is moveable between first and second operable positions by said handle (30) while said door (3, 4) is in said closed position.

4. An enclosed switchboard according to claim 1, wherein an actuator (28) comprises said circuit breaker mounted on said panel frame (1) and an interlocking mechanism between said circuit breaker and said shutter mechanism (33, 42), said circuit breaker having a connect mode and a disconnect mode, said interlocking mechanism being operable to dispose said shutter mechanism in said blocking position when said circuit breaker is in said connect mode, said interlocking mechanism being operable to dispose said shutter mechanism in said non-blocking position when said circuit breaker is in said disconnect mode.

5. An enclosed switchboard according to claim 4, wherein said circuit breaker has an OFF position, a TRIP position and an ON position, said circuit breaker being in said disconnect mode when said circuit breaker is in said OFF position and in said TRIP position, said circuit breaker being in said connect mode when said circuit breaker is in said ON position.

6. An enclosed switchboard according to claim 4, wherein said shutter mechanism comprises a guide plate (35) and a shutter (33) slidably mounted on said guide plate, said interlocking mechanism comprising mechanical linkage means (30a, 30b, 32) between said shutter (33) and said circuit breaker.

7. An enclosed switchboard according to claim 6, wherein said linkage means comprises an interlocking lever (32).

8. An enclosed switchboard according to claim 6, wherein said linkage means comprises a wire (40).

9. An enclosed switchboard according to claim 6, wherein said shutter mechanism comprises biasing means (36) biasing said shutter in said non-blocking position.

10. An enclosed switchboard according to claim 5, wherein said circuit breaker comprises a rotary member (30a) which rotates when said circuit breaker rotates between said OFF, said TRIP and said ON positions, said interlocking mechanism being operably connected to said rotary member (30a) to maintain said shutter mechanism in said non-blocking position when said circuit breaker is in said OFF and said TRIP positions and to move said shutter mechanism to said blocking position when said circuit breaker is rotated to said ON position.

11. An enclosed switchboard according to claim 10, wherein said rotary member mounts a pin (30b), said interlocking mechanism comprising a slidable member (32) having an elongated slot (32a), said pin (30b) being slidable in said slot (32a) without a sliding movement of said slidable member (32) when said circuit breaker is rotated between said OFF and said TRIP positions.

12. An enclosed switchboard according to claim 11, wherein said elongated slot (32a) has a terminating end, said pin (30b) engaging said terminating end to slide said slidable member (32) when said circuit breaker is rotated to said ON position.

13. An enclosed switchboard according to claim 1, wherein said opening (3a) is an elongated slot elongated in a generally horizontal position, said shutter mechanism comprising a shutter drive arm (34) which is generally vertically moveable to a position to block off at least a part of said slot.

14. An enclosed switchboard according to claim 1, wherein said opening (3a) is an elongated slot elongated in a generally horizontal direction, said shutter mechanism comprising a shutter drive arm (34) which is generally horizontally moveable to a position to block off at least a part of said slot.

15. An enclosed switchboard according to claim 1, further comprising a cover (38) pivotably mounted on said panel frame (1) between a closed and an open position, said cover (38) covering said opening (3a) when in said closed position, said cover (38) exposing said opening (3a) when in said open position so that said handle (30) can be inserted into a handle-receiving means.

## Patentansprüche

1. Abgeschlossener Schaltschrank mit einem oder mehr Einheitsrahmen (5), die als Befestigungsvorrichtungen oder Komponenten derart eingebaut sind, daß ein Einheitsrahmen (5) in Bezug auf Regalplatten (2), die an einem Konsolenrahmen (1) angebracht sind, herausgezogen und eingesetzt werden kann, wobei ein oder mehr Kontaktbefestigungsrahmen (9) mit einem Stromkontakt (7) bestückt sind, der mit einer Bußschiene (10) verbunden und von ihr getrennt sein kann, welche auf dem Konsolenrahmen angeordnet ist, und einem lastseitigen Kontakt (8), der mit einem lastseitigen Anschluß (11) verbunden und von ihm getrennt sein kann, der verschiebbar in der Richtung der Verbindung und Trennung in Bezug auf den Einheitsrahmen angebracht ist, und einem Hebelsperrmechanismus (16), der in dem Einheitsrahmen eingebaut ist und angebracht ist, um Drehbewegungen eines Arbeitshebels (18) an der Vorderseite des Einheitsrahmens in lineare Bewegungen in der Richtung der Verbindung und Trennung des Einheitsrahmens umzuwandeln, wobei eine Öffnung (3a) an einer Position an einer Tür (3) gebildet ist, welche die Vorderfläche des Konsolenrahmens (1) abdeckt, wobei die Öffnung (3a) der Position der Einführung des Arbeitshebels (18) in den Hebelsperrmechanismus entspricht, ein Klappenmechanismus (33; 42) vorgesehen ist, um die Position der Einführung des Arbeitshebels (18) zwischen der Öffnung (3a) und der Position der Einführung des Arbeitshebels (18) abzudecken, und ein Sperrmechanismus vorgesehen ist zwischen dem Klappmechanismus (33; 42) und einem Arbeitsgriff (30) eines Schaltungsunterbrechers, der auf dem Einheitsrahmen (5) angeordnet ist.

2. Abgeschlossener Schaltschrank nach Anspruch 1, wobei der Konsolenrahmen (1) eine Tür (3, 4) aufweist, um die Öffnung (3a) zu öffnen und zu schließen.

3. Abgeschlossener Schaltschrank nach Anspruch 2, wobei die Öffnung (3a) in der Tür derart angeordnet ist, daß ein Kontaktrahmen (9) zwischen einer ersten und einer zweiten Betriebsposition durch den Griff (30) beweglich ist, während die Tür (3, 4) in der geschlossenen Position ist.

4. Abgeschlossener Schaltschrank nach Anspruch 1, wobei ein Betätigungsglied (28) den Schaltungsunterbrecher aufweist, der auf dem Konsolenrahmen (1) angebracht ist, und einen Sperrmechanismus zwischen dem Schaltungsunterbrecher und dem Klappenmechanismus (33, 42), wobei der Schaltungsunterbrecher einen Verbindungsmodus und einen Trennmodus hat, der Sperrmechanismus betriebsfähig ist, um den Klappenmechanismus in der Sperrposition anzuordnen, wenn der Schaltungsunterbrecher in dem Verbindungsmodus ist, und der Sperrmechanismus betriebsfähig ist, um den Klappenmechanismus in der nichtsperrenden Position anzuordnen, wenn der Schaltungsunterbrecher in dem Trennmodus ist.

5. Abgeschlossener Schallschrank nach Anspruch 4, wobei der Schaltungsunterbrecher eine OFF-Position, eine TRIP-Position und eine ON-Position hat, wobei der Schaltungsunterbrecher in dem Trennungsmodus ist, wenn der Schaltungsunterbrecher in der OFF-Position und in der TRIP-Position ist, und der Schaltungsunterbrecher in dem Verbindungsmodus ist, wenn der Schaltungsunterbrecher in der ON-Position ist.

6. Abgeschlossener Schaltschrank nach Anspruch 4, wobei der Klappenmechanismus eine Führungsplatte (35) und eine Klappe bzw. Blende (33) aufweist, die gleitfähig auf der Führungsplatte angebracht ist, wobei der Sperrmechanismus mechanische Verbindungseinrichtungen (30a, 30b, 32) zwischen der Klappe (33) und dem Schaltungsunterbrecher aufweist.

7. Abgeschlossener Schaltschrank nach Anspruch 6, wobei die Verbindungseinrichtung einen Sperrhebel (32) aufweist.

8. Abgeschlossener Schaltschrank nach Anspruch 6, wobei die Verbindungseinrichtung einen Draht (40) aufweist.

9. Abgeschlossener Schaltschrank nach Anspruch 6, wobei der Klappenmechanismus eine Vorspanneinrichtung (36) aufweist, welche die Klappe in die nichtsperrende Position vorspannt.

10. Abgeschlossener Schaltschrank nach Anspruch 6, wobei der Schaltungsunterbrecher ein Drehelement (30a) aufweist, welches sich dreht, wenn der Schaltungsunterbrecher sich zwischen der OFF-, der TRIP- und der ON-Position dreht, wobei der Sperrmechanismus betriebsfähig verbunden ist mit dem Drehelement (30a), um den Klappenmechanismus in der nichtsperrenden Position zu halten, wenn der Schaltungsunterbrecher sich in der OFF- und der TRIP-Position befindet, und um den Klappenmechanismus in die Sperrposition zu bewegen, wenn der Schaltungsunterbrecher in die ON-Position gedreht ist.

11. Abgeschlossener Schaltschrank nach Anspruch 10, wobei das Drehelement einen Zapfen (30b) haltert, der Sperrmechanismus ein gleitfähiges Element (32) mit einem verlängerten Schlitz (32a) aufweist, und der Zapfen (30b) in dem Schlitz (32a) gleitfähig ist ohne eine Gleitbewegung des gleitfähigen Elementes (32), wenn der Schaltungsunterbrecher zwischen der OFF- und der TRIP-Position gedreht ist.

12. Abgeschlossener Schaltschrank nach Anspruch 11, wobei der verlängerte Schlitz (32a) ein Abschlußende hat, wobei der Zapfen (30b) das Abschlußende eingreift, um das gleitfähige Element (32) zu verschieben, wenn der Schaltungsunterbrecher in die ON-Position gedreht ist.

13. Abgeschlossener Schaltschrank nach Anspruch 1, wobei die Öffnung (3a) ein verlängerter Schlitz ist, der in einer allgemeinen horizontalen Position langgestreckt ist, wobei der Klappenmechanismus einen Klappenantriebsarm (34) aufweist, der allgemein vertikal in eine Position beweglich ist, um wenigstens einen Teil des Schlitzes zu sperren.

14. Abgeschlossener Schaltschrank nach Anspruch 1, wobei die Öffnung (3a) ein verlängerter Schlitz ist, der in einer allgemeinen horizontalen Richtung langgestreckt ist, wobei der Klappenmechanismus einen Klappenantriebsarm (34) aufweist, der allgemein horizontal beweglich ist in einer Position, um wenigstens einen Teil des Schlitzes zu sperren.

15. Abgeschlossener Schaltschrank nach Anspruch 1, ferner mit einem Deckel bzw. einer Abdeckung (38), die schwenkbar an dem Konsolenrahmen (1) angebracht ist zwischen einer geschlossenen und einer offenen Position, wobei der Deckel (38) die Öffnung (3a), wenn diese in der geschlossenen Position ist, abdeckt, wobei der Dekkel (38) die Öffnung (3a), wenn diese in der offenen Position ist, freilegt, so daß der Griff (30) in eine Griffaufnahmeeinrichtung eingesetzt werden kann.

## Revendications

1. Tableau de distribution fermé comprenant un ou plusieurs châssis individuels (5) qui sont installés pour le montage de dispositifs ou de composants de sorte qu'un châssis individuel (5) puisse être extrait, et mis en place, en relation avec des plaques étagères (2) fixées à un châssis de tableau (1), un ou plusieurs châssis de montage à contact (9) équipé d'un contact d'alimentation (7) qui peut être connecté à une barre bus (10), et déconnecté de celle-ci, disposée sur ledit châssis de tableau, et un contact côté charge (8) qui peut être connecté à une borne côté charge (11), et déconnecté de celle-ci, qui est mise en place de façon mobile dans ladite direction de connexion et de déconnexion en relation avec ledit châssis individuel, et un mécanisme de verrouillage réciproque à levier (16) qui est incorporé dans ledit châssis individuel et qui est agencé pour convertir des mouvements de rotation d'un levier de manoeuvre (18) au droit du côté avant dudit châssis individuel en des mouvements rectilignes dans la direction de connexion et de déconnexion dudit châssis individuel ; dans lequel une ouverture (3a) est formée dans une certaine position sur une porte (3) qui couvre la surface avant dudit châssis de tableau (1), l'ouverture (3a) correspondant à la position d'introduction dudit levier de manoeuvre (18) dans ledit mécanisme de verrouillage réciproque à levier ; dans lequel un mécanisme obturateur (33 ; 42) est disposé, pour couvrir la position d'introduction dudit levier de manoeuvre (18), entre ladite ouverture (3a) et ladite position d'introduction dudit levier de manoeuvre (18) ; et dans lequel un mécanisme de verrouillage réciproque est disposé entre ledit mécanisme obturateur (33 ; 42) et une poignée de manoeuvre (30) d'un coupe-circuit qui est situé sur ledit châssis individuel (5).

2. Tableau de distribution fermé selon la revendication 1, dans lequel ledit châssis de tableau (1) comprend une porte (3, 4) pour fermer et pour ouvrir ladite ouverture (3a).

3. Tableau de distribution fermé selon la revendication 2, dans lequel ladite ouverture (3a) est disposée dans ladite porte de telle façon qu'un châssis à contact (9) soit mobile entre une première et une seconde position pouvant être obtenue par ladite poignée (30) tandis que ladite porte (3, 4) est dans ladite position fermée.

4. Tableau de distribution fermé selon la revendication 1, dans lequel un actionneur (28) comprend ledit coupe-circuit monté sur ledit châssis de tableau (1) et un mécanisme de verrouillage réciproque entre ledit coupe-circuit et ledit mécanisme obturateur (33, 42) ledit coupe-circuit ayant un mode de connexion et un mode de déconnexion, ledit mécanisme de verrouillage réciproque étant manoeuvrable pour placer ledit mécanisme obturateur dans ladite position de verrouillage lorsque ledit coupe-circuit est dans ledit mode de connexion, ledit mécanisme de verrouillage réciproque étant manoeuvrable pour placer ledit mécanisme obturateur dans ladite position de non-verrouillage lorsque ledit coupe-circuit est dans ledit mode de déconnexion.

5. Tableau de distribution fermé selon la revendication 4, dans lequel ledit coupe-circuit possède une position ouverte (OFF), une position débrayée (TRIP) et une position fermée (ON), ledit coupe-circuit étant dans ledit mode de déconnexion lorsque ledit coupe-circuit est dans ladite position ouverte et dans ladite position débrayée, ledit coupe-circuit étant dans ledit mode de connexion lorsque ledit coupe-circuit est dans ladite position fermée.

6. Tableau de distribution fermé selon la revendication 4, dans lequel ledit mécanisme obturateur comprend une plaque de guidage (35) et un obturateur (33) monté de manière à pouvoir coulisser sur ladite plaque de guidage, ledit mécanisme de verrouillage réciproque comprenant un moyen de liaison mécanique (30a, 30b, 32) entre ledit obturateur (33) et ledit coupe-circuit.

7. Tableau de distribution fermé selon la revendication 6, dans lequel ledit moyen de liaison comprend un levier de verrouillage réciproque (32).

8. Tableau de distribution fermé selon la revendication 6, dans lequel ledit moyen de liaison comprend un fil (40).

9. Tableau de distribution fermé selon la revendication 6, dans lequel ledit moyen obturateur comprend un moyen de rappel (36) rappelant ledit obturateur dans ladite position de non-verrouillage.

10. Tableau de distribution fermé selon la revendication 5, dans lequel ledit coupe-circuit comprend un élément tournant (30a) qui tourne lorsque ledit coupe-circuit tourne entre ladite position ouverte, ladite position débrayée, et ladite position fermée, ledit mécanisme de verrouillage réciproque étant relié de façon fonctionnelle audit élément tournant (30a) pour maintenir ledit mécanisme obturateur dans ladite position de non-verrouillage lorsque ledit coupe-circuit est dans ladite position ouverte et dans ladite position débrayée et pour déplacer ledit mécanisme obturateur vers ladite position de verrouillage lorsque ledit coupe-circuit est tourné vers ladite position fermée.

11. Tableau de distribution fermé selon la revendication 10, dans lequel ledit élément tournant porte un ergot (30b), ledit mécanisme de verrouillage réciproque comprenant un élément pouvant coulisser (32) comportant une fente allongée (32a), ledit ergot (30b) pouvant coulisser dans ladite fente (32a) sans mouvement coulissant dudit élément pouvant coulisser (32) lorsque ledit coupe-circuit est entraîné en rotation entre ladite position ouverte et ladite position débrayée.

12. Tableau de distribution fermé selon la revendication 11, dans lequel ladite fente allongée (32a) a une extrémité terminale, ledit ergot (30b) contactant ladite extrémité terminale pour faire coulisser ledit élément pouvant coulisser (32) lorsque ledit coupe-circuit est tourné vers ladite position fermée.

13. Tableau de distribution fermé selon la revendication 1, dans lequel ladite ouverture (3a) est une fente allongée orientée dans une position globalement horizontale, ledit mécanisme obturateur comprenant un bras de commande d'obturateur (34) qui est mobile globalement verticalement vers une position pour obturer au moins une partie de ladite fente.

14. Tableau de distribution fermé selon la revendication 1, dans lequel ladite ouverture (3a) est une fente allongée orientée dans une position globalement horizontale, ledit mécanisme obturateur comprenant un bras de commande d'obturateur (34) qui est mobile globalement horizontalement vers une position pour obturer au moins une partie de ladite fente.

15. Tableau de distribution fermé selon la revendication 1, comprenant en outre un couvercle (38) monté de manière à pouvoir pivoter sur ledit châssis de tableau (1) entre une position fermée et une position ouverte, ledit couvercle (38) recouvrant ladite ouverture (3a) lorsqu'il est dans ladite position fermée, ledit couvercle (38) découvrant ladite ouverture (3a) lorsqu'il est dans ladite position ouverte de sorte que ladite poignée (30) peut être introduite dans un moyen récepteur de poignée.
